Europäisches Patentamt

European Patent Office

Office européen des brevets

(11) Veröffentlichungsnummer : **0 162 256**
B1

(12) **EUROPÄISCHE PATENTSCHRIFT**

(45) Veröffentlichungstag der Patentschrift :
15.06.88

(21) Anmeldenummer : 85104193.9

(22) Anmeldetag : 06.04.85

(51) Int. Cl.⁴ : **A 47 J 31/057**, A 47 J 31/06

(54) Filtertrichter für eine elektrische Kaffeemaschine.

(30) Priorität : 21.04.84 DE 3415170

(43) Veröffentlichungstag der Anmeldung :
27.11.85 Patentblatt 85/48

(45) Bekanntmachung des Hinweises auf die Patenterteilung : 15.06.88 Patentblatt 88/24

(84) Benannte Vertragsstaaten :
DE FR GB IT NL

(56) Entgegenhaltungen :
EP-A- 0 131 935
DE-A- 2 605 957
DE-B- 2 658 295

(73) Patentinhaber : **Braun Aktiengesellschaft**
**Rüsselsheimer Strasse 22**
**D-6000 Frankfurt/Main (DE)**

(72) Erfinder : **Wunder, Dieter**
**Kirchstrasse 9**
**D-6131 Reichelsheim 6 (DE)**

(74) Vertreter : **Einsele, Rolf**
**Braun Aktiengesellschaft Postfach 1120 Frankfurter**
**Strasse 145**
**D-6242 Kronberg Taunus (DE)**

## Beschreibung

Die vorliegende Erfindung betrifft einen Filtertrichter für elektrische Kaffeemaschinen mit einem im Trichterboden angeordneten Ausflußventil, das eine senkrechte Öffnung und einen diese von unten verschließenden, durch einen Hebel oder ein Hebelsystem betätigbaren elastischen Dichtkörper aufweist.

Derartige Filtertrichter, die das Kaffeemehl für den Brühvorgang aufnehmen und aus deren verschließbarer Ausflußöffnung der Kaffee in eine darunter stehende Kaffeekanne fließt, sind in zahlreichen Ausführungsformen bekannt. So ist beispielsweise aus der DE-A-2 605 957 ein durch ein Ventil verschließbarer Filtertrichter bekannt, bei dem das Ventil ein Auslaufen des Kaffees dann verhindern soll, wenn keine Kaffeekanne ordnungsgemäß unter dem Filtertrichter steht. Bei dieser Ausführungsform ist es von Nachteil, daß durch den Dichtkörper ein geschlossener Kaffeestrahl verhindert wird, da der Kaffee den Dichtkörper umfließen muß und dabei in eine Vielzahl von Einzelströmen und Tropfen geteilt wird, was zur Folge hat, daß der Kaffeestrahl auf dem Weg zwischen Filtertrichter und Kaffeekanne stark abkühlt.

Da aber der Kaffee im allgemeinen möglichst heiß bleiben soll, ist es Aufgabe der Erfindung, durch konstruktive Maßnahmen zu verhindern, daß ein Abkühlungseffekt eintritt.

Diese Aufgabe wird erfindungsgemäß dadurch gelöst, daß der Dichtkörper im Innenraum eines Sammeltrichters unterhalb der Ausflußöffnung des Filtertrichters gehaltert und mit diesem an dem Ventilbetätigungshebel angelenkt ist, wobei ein zwischen dem Dichtkörper und der Innenwandung des Sammeltrichters freibleibender Ringspalt zur Mündung des Sammeltrichters führt. Durch diese erfindungsgemäße Anordnung wird zunächst das Brühgetränk, nachdem es die Ventilanordnung verlassen hat, in dem Sammeltrichter gesammelt und fließt anschließend in einem geschlossenen Strahl über die am Sammeltrichter ausgebildete Öffnung in die Kaffeekanne. Hierdurch verläßt das Brühgetränk auf dem kürzesten Weg den Filtertrichter und kühlt daher nur unmerklich ab.

Um den Brühgetränkestrahl nach Verlassen des Ventils gezielt in den in dem Sammeltrichter vorgesehenen Ringspalt einfließen zu lassen, ist in einer Weiterbildung der Erfindung vorgesehen, daß der Dichtkörper an seiner Oberseite die Form einer nach oben offenen Schüssel hat, deren Innenfläche als Prallfläche für den ausfließenden Kaffee dient und deren oberer Rand umlaufend dichtend von unten gegen den Randbereich der Ventilöffnung pressbar ist und daß die dem Dichtkörper gegenüberliegende, die Ventilöffnung umgebende Unterseite des Filtertrichters eine Prallfläche in Form einer den Dichtkörper umfassenden nach unten offenen Schüssel bildet, wobei der größte Durchmesser dieser Prallfläche kleiner ist als der obere Durchmesser des Sammeltrichters. Durch diese vorteilhafte Weiterbildung der Erfindung wird weiterhin ausgeschlossen, daß Teile des Brühgetränks über den Sammeltrichter hinaus nach außen gelangen, so daß ein Verspritzen des Kaffeekannendeckels vermieden wird.

Zur Erreichung einer gleichmäßigen Strömung des Brühgetränks, ist in vorteilhafter Weise vorgesehen, daß der Dichtkörper an seiner Oberseite die Form einer nach oben offenen Ringschüssel mit zentralem Strömungsteiler aufweist. Durch den zentralen Strömungsteiler werden seitlich abwandernde Spritzer vermieden. Damit der am Dichtkörper ausgebildete Strömungsteiler gleichzeitig eine Dichtwirkung beim Verschließen des Ventils aufweist, ist der Dichtkörper flexibel am Sammeltrichter gelagert.

Damit sich der Dichtkörper stets einwandfrei während des Dichtvorgangs an der Unterseite der Filterauslauföffnung zentrieren kann, ist in einer Weiterbildung der Erfindung vorgesehen, daß der Dichtkörper über ein flexibles, insbesondere einteilig angeformtes Zwischenstück am Sammeltrichter gelagert ist.

Um eine störungsfreie Anlenkung der Ventilanordnung zu erreichen, ist es vorteilhaft, daß die Anlenkung des Ventilbetätigungshebels an der Außenseite des Sammeltrichters an einer Achse erfolgt, deren gedachte Verlängerung etwa durch das Zentrum des Dichtkörpers verläuft. Hierdurch wird ein einfaches Verschließen der Ventilanordnung erreicht, ohne daß die Ventilbetätigungshebel sich störend auf den Sammeltrichter und den Dichtkörper auswirken.

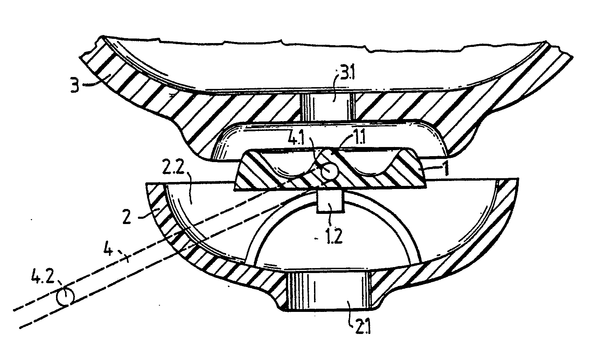

Ein einziges Ausführungsbeispiel der Erfindung ist in einem in der Zeichnung dargestellten Teillängsschnitt im unteren Bereich des Filtertrichters dargestellt und wird im folgenden näher erläutert.

Der Dichtkörper 1 des am unteren Abschnitts des Filtertrichters 3 ausgebildeten Ausflußventils ist im Innenraum eines Sammeltrichters 2 angeordnet, der sich unterhalb der Ventil-Ausflußöffnung 3.1 befindet und der sich zusammen mit dem Dichtkörper 1 mittels eines in der Zeichnung gestrichelt angedeuteten Hebels oder Hebelsystems 4 auf und ab bewegen läßt. Wird der Dichtkörper 1 durch Absenken in seine Offenstellung gebracht, so fließt der ihn umströmende Kaffee auf kürzestem Wege in dem darunter befindlichen Sammeltrichter 2 zusammen und verläßt diesen in einem geschlossenen Strahl.

Der Dichtkörper 1 bildet an seiner Oberseite die Form einer nach oben offenen Schüssel, deren Innenfläche als Prallfläche für den aus dem Filtertrichter 3 ausfließenden Kaffee dient und diesen gegen die dem Dichtkörper 1 gegenüberliegende, die Ventilöffnung 3.1 umgebende, vorzugsweise ebenfalls schüsselförmige Unterseite des Filtertrichters 3 lenkt, von wo der Kaffee dann in den Sammeltrichter 2 geleitet wird. Durch die der Kaffeeströmung angepaßte Schüsselform des Dichtkörpers 1 sowie der Prallfläche an der Unterseite des Filtertrichters 3 entsteht ein stetiger Kaffeefluß von der Filtertrichter-Ausflußöffnung 3.1 bis zur Mündung 2.1 des Sammeltrichters 2. Eine weitere Vervollkommnung dieses Effektes wird dadurch erzielt, daß die Oberseite des Dichtkörpers 1 die Form einer nach oben offenen Ringschüssel bildet, die eine als Strömungsteiler wirkende zentrale Erhebung 1.1 aufweist.

Der Dichtkörper 1 ist flexibel am Sammeltrichter 2 gelagert, wobei diese flexible Lagerung über ein flexibles, insbesondere einteilig an den Dichtkörper 1 angeformtes Zwischenstück 1.2 erfolgt. Die Anlenkung des Betätigungshebels 4 wird über eine an der Außenseite des Sammeltrichters 2 ausgebildete Achse 4.1 gesteuert, deren gedachte Verlängerung etwa durch das Zentrum des Dichtkörpers 1 verläuft. Hierdurch ergibt sich eine optimale Schließgeometrie des Dichtkörpers 1. Die Achse 4.1 ist mit dem Hebel 4 schwenkbar verbunden.

**Patentansprüche**

1. Filtertrichter (3) für elektrische Kaffeemaschinen mit einem im Trichterboden angeordneten Ausflußventil, das eine senkrechte Öffnung (3.1) und einen diese von unten verschließenden, durch einen Hebel (4) oder ein Hebelsystem betätigbaren elastischen Dichtkörper (1) aufweist, dadurch gekennzeichnet, daß der Dichtkörper (1) im Innenraum eines Sammeltrichters (2) unterhalb der Ausflußöffnung (3.1) des Filtertrichters (3) gehaltert und mit diesem an dem Ventilbetätigungshebel (4) angelenkt ist, wobei ein zwischen dem Dichtkörper (1) und der Innenwandung des Sammeltrichters (2) freibleibender Ringspalt zur Mündung (2.1) des Sammeltrichters (2) führt.

2. Filtertrichter (3) nach Anspruch 1, dadurch gekennzeichnet, daß der Dichtkörper (1) an seiner Oberseite die Form einer nach oben offenen Schüssel hat, deren Innenfläche als Prallfläche für den ausfließenden Kaffee dient und deren oberer Rand umlaufend dichtend von unten gegen den Randbereich der Ventilöffnung (3.1) pressbar ist und daß die dem Dichtkörper (1) gegenüberliegende, die Ventilöffnung (3.1) umgebende Unterseite des Filtertrichters (3) eine Prallfläche in Form einer den Dichtkörper (1) umfassenden nach unten offenen Schüssel (2) bildet, wobei der größte Durchmesser dieser Prallfläche kleiner ist als der obere Durchmesser des Sammeltrichters (2).

3. Filtertrichter (3) nach Anspruch 2, dadurch gekennzeichnet, daß der Dichtkörper (1) an seiner Oberseite die Form einer nach oben offenen Ringschüssel mit zentralem Strömungsteiler (1.1) hat.

4. Filtertrichter (3) nach einem der Ansprüche 1 bis 3, dadurch gekennzeichnet, daß der Dichtkörper (1) flexibel am Sammeltrichter (2) gelagert ist.

5. Filtertrichter (3) nach Anspruch 4, dadurch gekennzeichnet, daß der Dichtkörper (1) über ein flexibles, insbesondere einteilig angeformte Zwischenstück (1.2) am Sammeltrichter (2) gelagert ist.

6. Filtertrichter (3) nach einem der Ansprüche 1 bis 5, dadurch gekennzeichnet, daß die Anlenkung des Ventilbetätigungshebels (4) an der Außenseite des Sammeltrichters (2) an einer Achse erfolgt, deren gedachte Verlängerung etwa durch das Zentrum des Dichtkörpers (1) verläuft.

**Claims**

1. A funnel filter (3) for electric coffee makers, having an outlet valve device which is arranged in the bottom of the funnel and includes a vertical orifice (3.1) and an elastic sealing body (1) which closes said orifice from underneath and is adapted to be actuated by a lever (4) or a lever arrangement, characterized in that the sealing body (1) is mounted in the inner space of a collection container (2) below the discharge orifice (3.1) of the funnel filter (3) and is pivoted together with said container to the valve actuating lever (4), with an annular clearance which is maintained between the sealing body (1) and the inner wall of the collection container (2) extending to the outlet (2.1) of the collection container (2).

2. A funnel filter (3) as claimed in claim 1, characterized in that the sealing body (1) has its upper side shaped in the form of an upwardly open dish the inner surface of which functions as an impact area for the outflowing coffee and the upper edge of which is adapted to be pressed upwardly into circumferentially sealing engagement with the edge area of the valve orifice (3.1), and that the underside of the funnel filter (3) opposite the sealing body (1) and surrounding the valve orifice (3.1) forms an impact area in the form of a downwardly open dish embracing the sealing body (1), with the maximum diameter of said impact area being smaller than the upper diameter of the collection container (2).

3. A funnel filter (3) as claimed in claim 2, characterized in that the upper side of the sealing body (1) is shaped in the form of an upwardly open annular dish having a central flow divider (1.1).

4. A funnel filter (3) as claimed in any one of the claims 1 to 3, characterized in that the sealing body (1) is flexibly mounted on the collection container (2).

5. A funnel filter (3) as claimed in claim 4, characterized in that the sealing body (1) is mounted on the collection container (2) via a flexible adapter (1.2) in particular integrally formed with said sealing body.

6. A funnel filter (3) as claimed in any one of the claims 1 to 5, characterized in that the valve actuating lever (4) is pivotally mounted on the outside of the collection container (2) on a shaft whose imaginary extension passes approximately through the center of the sealing body (1).

**Revendications**

1. Entonnoir à filtre (3) pour cafetières électriques, avec une soupape de décharge agencée dans le fond de cet entonnoir et dotée d'une ouverture verticale (3.1) et d'un organe d'étanchéité élastique (1) qui ferme cette ouverture par le dessous et qui peut être actionné par un levier (4) ou par un système à levier, caractérisé par le fait que l'organe d'étanchéité (1) est maintenu dans l'espace intérieur d'un entonnoir collecteur (2), en dessous de l'ouverture de décharge (3.1) de l'entonnoir à filtre (3), et est articulé avec celui-ci sur le levier (4) d'actionnement de la soupape, un interstice annulaire subsistant entre l'organe d'étanchéité (1) et la paroi intérieure de l'entonnoir collecteur (2) conduisant à l'embouchure (2.1) de cet entonnoir collecteur (2).

2. Entonnoir à filtre (3) selon revendication 1, caractérisé par le fait que le côté dessus de l'organe d'étanchéité (1) possède la forme d'une cuve ouverte vers le haut, dont la surface intérieure sert de surface de rebondissement pour le café effluent, et dont le bord supérieur peut être poussé, de bas en haut, contre la région du bord de l'ouverture (3.1) de soupape, en réalisant une étanchéité périmétrique, et par le fait que le côté dessous de l'entonnoir à filtre (3), situé en vis-à-vis de l'organe d'étanchéité (1) et entourant l'ouverture de soupape (3.1), constitue une surface de rebondissement ayant la forme d'une cuve ouverte vers le dessous, entourant l'organe d'étanchéité (1), le plus grand diamètre de cette surface de rebondissement étant plus petit que le diamètre supérieur de l'entonnoir collecteur (2).

3. Entonnoir à filtre (3) selon revendication 2, caractérisé par le fait que le côté dessus de l'organe d'étanchéité (1) possède la forme d'une cuve annulaire ouverte vers le haut et dotée d'un répartiteur d'écoulement central (1.1).

4. Entonnoir à filtre (3) selon l'une des revendications 1 à 3, caractérisé par le fait que l'organe d'étanchéité (1) est monté de manière flexible sur l'entonnoir collecteur (2).

5. Entonnoir à filtre (3) selon revendication 4, caractérisé par le fait que l'organe d'étanchéité (1) est monté sur l'entonnoir collecteur (2) au moyen d'une pièce intermédiaire (1.2) flexible, notamment formée d'un seul tenant.

6. Entonnoir à filtre (3) selon l'une des revendications 1 à 5, caractérisé par le fait que l'articulation du levier (4) d'actionnement de soupape est réalisée sur le côté extérieur de l'entonnoir collecteur (2), sur un axe dont le prolongement imaginaire passe sensiblement par le centre de l'organe d'étanchéité (1).